# FASCICULE DE BREVET EUROPEEN

(11) **EP 3 476 723 B1**
(45) Date de publication et mention de la délivrance du brevet: **29.07.2020**
(21) Numéro de dépôt: 18200537.1
(22) Date de dépôt: 15.10.2018
(51) Int. Cl.: B64C 11/38, F01D 25/18

(54) **TUBE DE TRANSFERT D'HUILE POUR UN SYSTÈME DE COMMANDE DE RÉGULATION DU PAS D'UNE HÉLICE DE TURBOMACHINE**
ÖLTRANSFERLEITUNG FÜR EIN STEUERSYSTEM EINER PITCHREGELUNG EINES PROPELLERS FÜR TURBOTRIEBWERKE
OIL TRANSFER TUBE FOR A CONTROL SYSTEM FOR CONTROLLING THE PITCH OF A TURBINE ENGINE PROPELLER

(30) Priorité: 24.10.2017 FR 1760020
(43) Date de publication de la demande: 01.05.2019
(73) Titulaire: Safran Transmission Systems, 92700 Colombes (FR)
(72) Inventeur: HERT, Xavier, Paul, Lucien, 77550 MOISSY-CRAMAYEL (FR); MOREAU de LIZOREUX, Aldric Renaud Gabriel Marie, 77550 MOISSY-CRAMAYEL (FR); MORELLI, Boris Pierre Marcel, 77550 MOISSY-CRAMAYEL (FR)
(74) Mandataire: Gevers & Orès

(56) Documents cités:
- FR-A- 1 256 667
- FR-A1- 3 013 325
- US-A1- 2010 008 779

## Description

### RESUME DE L'INVENTION

La présente invention concerne notamment un tube de transfert d'huile pour un système de commande de régulation du pas d'une hélice de turbomachine, en particulier d'aéronef.

### ETAT DE LA TECHNIQUE

L'état de la technique comprend notamment les documents US-A1-2010/008779, FR-A1-3 013 325 et FR-A-1 256 667.

La présente invention s'applique au domaine des turbomachines du type turbopropulseur, c'est-à-dire des turbomachines équipées d'au moins une hélice propulsive qui est non carénée par opposition à une hélice de soufflante qui est elle carénée.

Une turbomachine de type turbopropulseur comprend principalement une partie « générateur de gaz » et une partie « propulsion » qui comporte une hélice.

Pour permettre le fonctionnement optimal de la turbomachine selon les différentes phases de vol rencontrées, les pales de l'hélice peuvent être orientées autour de leurs axes de pivot respectifs. Elles sont entraînées en rotation autour de ces axes par un système de commande permettant de faire varier le calage des pales en cours de vol, c'est-à-dire le pas de l'hélice. Par exemple, les pales peuvent varier selon le système, de + 90° à - 30° pour les phases de vol, de + 30° à - 30° pour les phases au sol et de reverse, et avoir un retour rapide à + 90°, en position drapeau, en cas de dysfonctionnement en vol (panne moteur), pour laquelle les pales sont effacées par rapport à la direction d'avance de l'avion et offrent le moins de traînée possible.

Comme système de commande, on connaît ceux décrits dans les demandes de brevet français du demandeur FR-A1-2 980 770, FR-A1-2 996 272 et FR-A1-3 013 325.

Ce système de commande de régulation du pas des pales d'une hélice peut comporter :
- un mécanisme de commande de puissance fluidique à actionneur linéaire centré sur l'axe longitudinal de la turbomachine et solidaire d'un carter fixe supportant l'hélice ;
- un mécanisme de liaison pour transformer la translation de la partie mobile du vérin en une rotation des pales pour en modifier le pas, et comportant, à cet effet, un palier de transfert dont la bague interne est solidaire de la partie mobile de l'actionneur, et un moyen de transmission à bielles entre la bague externe du palier et les pales, et
- des moyens d'alimentation en huile et de commande de l'actionneur.

À mesure que la partie mobile de l'actionneur se déplace, la bague interne du palier de transfert, solidaire de la partie mobile de l'actionneur, suit le déplacement et entraîne la bague externe rotative via le contact des organes de roulement, et tire ou pousse sur les bielles du moyen de transmission, ce qui permet de modifier l'angle de calage des pales qui tournent dans leurs logements.

L'invention concerne plus spécifiquement l'alimentation en huile d'un tel système de commande. Dans un cas particulier, ces moyens d'alimentation en huile comprennent un tube de transfert d'huile qui est destiné à être monté coaxialement à l'intérieur d'un arbre tubulaire de l'hélice. Le tube a une forme allongée et comporte une première partie d'extrémité longitudinale mâle destinée à être engagée dans un logement femelle d'un carter de stator qui est équipé d'un circuit d'alimentation en huile du tube, et une seconde partie d'extrémité longitudinale mâle centré et guidé par un palier porté dans l'arbre de l'hélice. Le tube permet de transférer l'huile depuis le circuit d'alimentation jusqu'à l'actionneur linéaire précité.

L'huile est transférée à une pression importante et il est nécessaire d'assurer une étanchéité dynamique à l'intérieur de l'arbre d'hélice pour conserver cette pression destinée à commander l'actionneur. Dans la technique actuelle, la seconde partie d'extrémité du tube est guidée par un palier hydrodynamique avec un jeu radial réduit de manière à minimiser les fuites.

L'intégration d'un palier hydrodynamique dans l'arbre hélice nécessite une maîtrise des désalignements entre la partie fixe du circuit d'alimentation solidaire du carter et la partie tournante solidaire de l'arbre d'hélice. Les désalignements sont à la fois statiques et dynamiques. Les désalignements statiques sont dus aux jeux d'assemblage du palier, et les désalignements dynamiques sont dus aux déformations sous charges du carter et de l'arbre d'hélice.

Ces désalignements sont significatifs et peuvent avoir un impact important sur la fuite du palier et donc le temps de réponse de la commande de pas d'hélice.

L'état de l'art actuel est que les désalignements sont repris par la déformation du tube de transfert entre l'arrivée d'huile dans le carter et le palier hydrodynamique. Le montage actuel du tube est hyperstatique.

La présente invention a pour but d'apporter une solution simple et efficace à ce problème.

### PRESENTATION DE L'INVENTION

L'invention propose un tube de transfert d'huile pour un système de commande de régulation du pas d'une hélice de turbomachine, en particulier d'aéronef, le tube étant destiné à être monté coaxialement à l'intérieur d'un arbre tubulaire de l'hélice, le tube ayant une forme allongée et comportant une première partie d'extrémité longitudinale mâle destinée à être engagée dans un logement femelle d'un carter de stator qui est équipé d'un circuit d'alimentation en huile du tube, et une seconde partie d'extrémité longitudinale mâle autour de laquelle est destiné à être monté un palier hydrodynamique de guidage du tube dans l'arbre, caractérisé en ce que ladite première partie d'extrémité comprend une extrémité annulaire libre à section arrondie convexe destinée à prendre appui axialement sur un fond annulaire dudit logement, et ladite seconde partie d'extrémité comprend une portée annulaire externe d'appui axial d'une bague interne dudit palier, cette portée annulaire présentant en section une forme incurvée convexe.

L'invention propose ainsi de conférer plusieurs degrés de liberté aux extrémités du tube de façon à réduire voire supprimer les désalignements au niveau du palier hydrodynamique. La coopération de la première partie d'extrémité du tube avec le logement du carter confère au moins deux degrés de liberté à cette extrémité grâce à la liaison pivotante entre l'extrémité libre de cette première partie d'extrémité et le fond du logement. La coopération de la seconde partie d'extrémité du tube avec la bague interne du palier confère au moins deux degrés de liberté à la bague et au palier grâce à la liaison pivotante entre la portée du tube et cette bague. La seconde partie d'extrémité est en outre apte à se déplacer en translation dans le palier.

Le montage du tube de transfert entre l'arbre d'hélice et le carter devient ainsi isostatique. Aucun effort dû aux déformations des structures n'est transmis par le palier hydrodynamique. Le palier ne voit pas de désalignement ni d'excentrement.

Le tube selon l'invention peut comprendre une ou plusieurs des caractéristiques suivantes prises indépendamment les unes des autres ou en combinaison les unes avec les autres :
- la première partie d'extrémité comprend une gorge annulaire externe de logement d'un joint torique d'étanchéité, ce joint étant destiné à coopérer avec une paroi dudit logement,
- la seconde partie d'extrémité comprend une gorge annulaire externe de logement d'un joint torique d'étanchéité, ce joint étant destiné à coopérer avec ladite bague interne,
- ladite portée annulaire est formée par un rebord annulaire externe du tube,

La présente invention concerne également un système de commande de régulation du pas d'une hélice de turbomachine, en particulier d'aéronef, comportant un tube tel que décrit ci-dessus.

La présente invention concerne encore une turbomachine, en particulier d'aéronef, comportant au moins une hélice de propulsion entraînée en rotation par un arbre tubulaire, et un système de commande de régulation du pas de l'hélice, ledit système comportant un tube tel que décrit ci-dessus qui est monté coaxialement à l'intérieur de l'arbre, la première partie d'extrémité du tube étant engagée dans un logement femelle d'un carter de stator qui est équipé d'un circuit d'alimentation en huile du tube, et la seconde partie d'extrémité du tube étant engagée dans un palier hydrodynamique de guidage du tube dans l'arbre.

La turbomachine selon l'invention peut comprendre une ou plusieurs des caractéristiques suivantes prises indépendamment les unes des autres ou en combinaison les unes avec les autres :
- ledit logement comprend un fond annulaire tronconique d'appui de l'extrémité libre de ladite première partie,
- ledit palier comprend une bague interne montée sur ladite seconde partie et comportant une extrémité libre comportant une surface annulaire à section incurvée concave et sur laquelle est en appui ladite portée annulaire,
- ladite surface annulaire présente en section un rayon de courbure qui est supérieur au rayon de courbure de la section de ladite portée annulaire,
- le palier est un palier hydrodynamique.

### BREVE DESCRIPTION DES DESSINS

L'invention sera mieux comprise et d'autres détails, caractéristiques et avantages de celle-ci apparaîtront plus clairement à la lecture de la description qui suit faite à titre d'exemple non limitatif et en référence aux dessins annexés, dans lesquels :
- la figure 1 est une vue schématique partielle en coupe axiale d'une turbomachine du type turbopropulseur,
- la figure 2 est une vue schématique en coupe axiale d'un système de commande de régulation du pas d'une hélice de turbomachine selon l'invention,
- la figure 3 est une vue très schématique en coupe axiale du système de la figure 2,
- la figure 4 est une vue schématique en coupe axiale d'une extrémité amont du système de la figure 2,
- la figure 5 est une vue schématique en coupe axiale d'une extrémité aval du système de la figure 2,
- la figure 6 est une vue schématique en perspective d'une première partie d'extrémité d'un tube de transfert selon l'invention,
- la figure 7 est une vue schématique en perspective d'une seconde partie d'extrémité d'un tube de transfert selon l'invention,
- la figure 8 est une vue schématique en perspective d'un logement d'un carter pour le montage de la première partie d'extrémité du tube de la figure 6, et
- la figure 9 est une vue schématique en perspective d'une bague interne d'un palier hydrodynamique destiné à être monté sur la seconde partie d'extrémité du tube de la figure 7.

### DESCRIPTION DETAILLEE

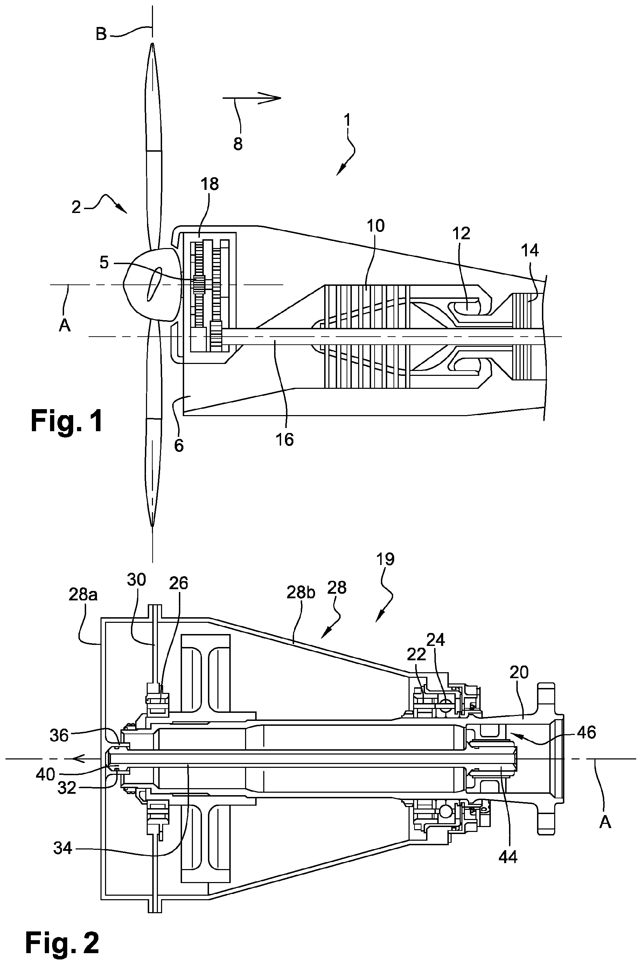

La figure 1 représente une turbomachine 1 du type turbopropulseur pour aéronef. La turbomachine comporte de manière classique une hélice 2 mobile à rotation selon un axe de rotation A, sur lequel est centré un arbre d'hélice 5. La vitesse de l'hélice 2 est préférentiellement de l'ordre de 1 000 à 1 500 trs/min, et son couple de sortie de l'ordre de 30 kN.m.

A l'aval de l'hélice 2, le turbopropulseur 1 comporte une entrée d'air 6, située par exemple verticalement sous l'axe de rotation A de l'hélice. A cet égard, il est noté que dans l'ensemble de la description, les termes « amont » et « aval » sont employés en référence à une direction principale de circulation d'air à travers l'hélice 2, cette direction étant parallèle à l'axe A et schématisé par la flèche 8 sur la figure 1.

L'entrée d'air 6 alimente en air un compresseur ou un groupe de compresseurs 10, à l'aval duquel se trouve une chambre de combustion 12. Les gaz issus de la combustion se détendent dans une turbine ou un groupe de turbines 14, qui entraîne un arbre moteur ou un groupe d'arbres 16. Cet arbre 16 est à distance et parallèle à l'arbre d'hélice 5. Il entraîne un réducteur de vitesse 18 qui entraîne lui-même l'arbre d'hélice 5. L'arbre moteur 16, le groupe de compresseurs 10, la chambre de combustion 12 et le groupe de turbines 14 sont centrés sur un axe parallèle à l'axe de rotation A de l'hélice 2, l'entrée d'air 6 se trouvant verticalement sous cet axe A.

Le réducteur de vitesse 18, également dénommé boîte de transmission, correspond à un boîtier d'engrenages comprenant en particulier un train épicycloïdal.

Les pales de l'hélice 2 sont du type à calage variable, c'est-à-dire qu'elles peuvent être orientées autour de leurs axes radiaux de pivot B grâce à un système de commande de régulation du pas des pales, de façon que celles-ci prennent une position angulaire optimale voulue selon les conditions de fonctionnement de la turbomachine et les phases de vol concernées (rotation des pales dans les deux sens avec angles d'hélice croissant et décroissant, et retour des pales en position drapeau en cas de dysfonctionnement). Dans la présente description, seul le système d'orientation 19 des pales associé à l'hélice 2 sera décrit. De façon classique, tel que décrit dans les documents de l'art antérieur cités plus haut, le système de commande 19 comprend au moins un actionneur à déplacement linéaire tel qu'un vérin centré sur l'axe A, un palier de transfert de mouvement, un moyen de transmission et des moyens d'alimentation en huile de l'actionneur.

La figure 2 montre de manière plus précise l'environnement d'un système de commande 19 selon l'invention. La référence 20 désigne l'arbre de l'hélice qui est tubulaire et centré sur l'axe A.

L'arbre 20 est centré et guidé par des paliers 22, 24 et 26 dans un carter de stator 28 de la turbomachine. Dans l'exemple représenté, l'arbre 20 est guidé au voisinage de l'une de ses extrémités longitudinales, ici l'extrémité aval, par deux paliers, respectivement à rouleaux 22 et à billes 24, et au voisinage de son extrémité longitudinale opposée, amont, par un autre palier à rouleaux 26.

Le carter 28 comprend notamment une partie annulaire amont 28a en forme de disque dont la périphérie externe est reliée à l'extrémité amont de plus grand diamètre d'une partie tronconique amont 28b du carter. Cette extrémité amont de plus grand diamètre est fixée également à un support annulaire 30 du palier 26 et l'extrémité aval de plus petit diamètre de la partie 28b forme un support annulaire des paliers 22 et 24.

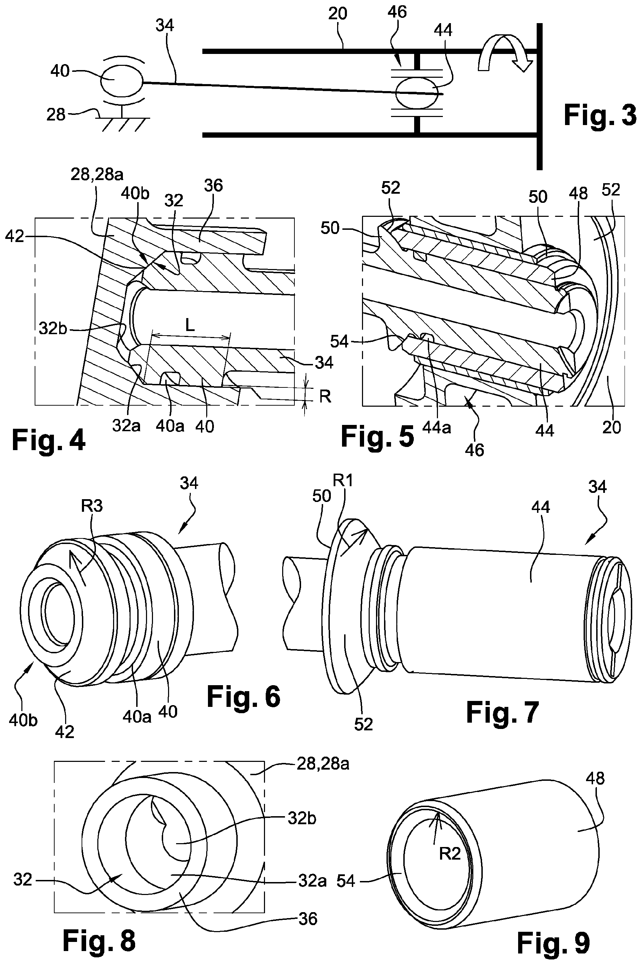

La partie 28a du carter comprend en son centre un logement cylindrique 32 orientée vers l'aval et destiné à recevoir une extrémité amont d'un tube de transfert 34. La figure 8 permet de mieux visualiser le logement 32 qui est délimité par un rebord cylindrique 36 centré sur l'axe A et en saillie sur la face radiale aval de la partie 28a du carter. Le fond de ce logement 32 comprend d'une part une surface annulaire périphérique externe 32a qui a en section une forme conique, et d'autre part une surface de fond 32b qui est percée d'un orifice 38 d'alimentation en huile sous pression du tube 34.

Le logement 32 sert ainsi à recevoir une extrémité amont du tube 34 et à l'alimenter en huile sous pression grâce à un circuit d'alimentation dont seul l'orifice d'alimentation 38 est visible dans les dessins.

Comme on le voit à la figure 2, l'extrémité amont de l'arbre d'hélice 20 entoure en partie le rebord cylindrique 36.

Le tube de transfert 34 s'étend sur une majeure partie de la dimension longitudinale de l'arbre 20 en étant logé coaxialement à l'intérieur de celui-ci. Le tube 34 a une forme générale allongée et comporte une première partie d'extrémité longitudinale 40 engagée axialement depuis l'aval dans le logement 32. Cette partie d'extrémité 40 a une forme générale cylindrique et est engagée par emmanchement mâle-femelle dans le logement 32.

La partie d'extrémité 40 comprend une gorge annulaire externe 40a de logement d'un joint torique destiné à coopérer à étanchéité avec la surface cylindrique interne du rebord 36. De plus, l'extrémité annulaire libre 40b, donc amont, de la partie d'extrémité 40 comprend une surface périphérique externe 42 à section incurvée convexe qui est destinée à prendre appui sur la surface 32a pour former une liaison rotulante entre la partie 40 et le carter 28. Cette liaison rotulante peut être facilitée par la longueur L ou dimension axiale de la partie 40 qui est engagée dans le logement 32 ainsi que par le jeu radial R entre la partie 40 et la surface cylindrique interne du rebord 36. La longueur L est par exemple comprise entre 5 et 30mm, et de préférence entre 10 et 20mm. Le jeu radial est par exemple inférieur à 2mm et de préférence inférieur à 1mm. Dans l'exemple représenté, la partie 40 comprend une surépaisseur radiale par rapport au corps médian du tube. La longueur totale de la partie 40, depuis son extrémité libre 40b, jusqu'à la fin de la surépaisseur, est inférieure à la profondeur ou dimension axiale du logement 32.

La liaison rotulante permet de conférer deux degrés de liberté à la partie 40 du tube et en particulier les deux degrés de liberté en pivotement par rapport à un centre de pivotement défini par la surface incurvée convexe de la surface 42. La rotation autour de l'axe A est empêchée par la friction du joint torique entre la surface interne du logement 36 et les surfaces de la gorge du joint 40a. La surface 42 présente ici un rayon de courbure noté R3.

Le tube 34 comporte à l'aval une seconde partie d'extrémité longitudinale 44 de forme générale cylindrique, qui est centrée et guidée dans l'arbre 20 par un palier hydrodynamique 46. La seconde partie 44 est engagée par emmanchement mâle-femelle dans le palier 46.

La partie d'extrémité 44 comprend une gorge annulaire externe 44a de logement d'un joint torique destiné à coopérer à étanchéité avec la surface cylindrique interne d'une bague interne 48 du palier 46. Cette bague interne a son extrémité amont qui est en appui axial sur une portée périphérique externe 50 de la partie 44.

La portée 50 est ici formée par un rebord annulaire externe du tube et comprend une surface annulaire 52 ayant en section une forme incurvée convexe, qui est orientée sensiblement vers l'aval, et sur laquelle vient en appui l'extrémité amont de la bague 46. Cette extrémité amont comprend une surface annulaire 54 à section de forme incurvée concave destinée à coopérer avec la surface 52 afin de former une autre liaison rotulante entre la partie 44 et le palier 46.

Cette liaison rotulante permet de conférer deux degrés de liberté à la bague 48 du palier vis-à-vis de la partie 44 du tube et en particulier les deux degrés de liberté en pivotement par rapport à un centre de pivotement défini par la surface incurvée convexe de la surface 52 La rotation autour de l'axe A est empêchée par la friction du joint torique entre la surface interne du palier 48 et les surfaces de la gorge du joint 44a. La surface 52 présente ici un rayon de courbure noté R1 et la surface 54 présente un rayon de courbure R2. R2 est de préférence supérieur à R1. La partie d'extrémité 44 du tube est en outre apte à se déplacer en translation le long de l'axe A et à tourner autour de ce même axe dans le palier hydrodynamique.

La bague 48 est entourée par un manchon 50 qui est lui-même entouré par une bague externe 52 du palier hydrodynamique. La bague externe 52 est solidaire de l'arbre d'hélice et fixée à l'intérieur de ce dernier.

En utilisation, de l'huile sous pression est située en aval du palier, elle alimente celui-ci pour son fonctionnement hydrodynamique. Un film d'huile se forme entre la bague 48 qui ne tourne pas et le manchon 50 qui est entraîné en rotation par l'arbre hélice 20. La différence de vitesse entre ces éléments génère un effet de portance hydrodynamique.

Les parties d'extrémité 40, 44 du tube, et en particulier leurs surfaces 42,52 en portions de sphère, peuvent être réalisées simplement par tournage. Ces surfaces 42,52 peuvent être traitées localement afin de renforcer leur dureté et limiter leur usure par frottement.

Comme on le voit dans les dessins, pour chacune des deux parties d'extrémité 40, 44 du tube 34, le joint torique est situé au plus près de la liaison rotulante pour limiter l'impact des désalignements sur les jeux radiaux.

Dans un cas particulier de réalisation de l'invention, un désalignement de 10' d'angle est possible du côté du carter 28 sans perte d'étanchéité au niveau du joint torique.

Dans le mode de réalisation représenté, les diamètres externes des parties d'extrémité 40, 44 du tube sont différents, la partie d'extrémité 40 ayant un diamètre plus petit que la partie d'extrémité 44. Ceci peut être avantageux pour des raisons d'encombrement à l'intérieur de l'arbre d'hélice 20

En fonctionnement, l'huile qui s'écoule du circuit d'alimentation peut être à une pression très importante, de l'ordre de 30 à 50 bars. Cette pression exerce des efforts par effet piston sur le tube 34, qui est sollicité vers l'amont. Pour reprendre les efforts à l'amont du tube, il est possible d'interposer une bague rotulante dans un matériau approprié tel que du bronze ou de l'acier, entre la partie 40 et le carter 28, par exemple à l'intérieur du logement 32.

Les gains directs apportés par l'invention peuvent être :
- l'augmentation de la fiabilité de l'étanchéité dynamique qui ne transmet plus d'effort entre le tube de transfert et le support du palier dans l'arbre. Il est donc moins sujet à l'usure ; et
- l'amélioration de l'étanchéité dynamique du palier hydrodynamique en limitant les désalignements et les excentrements qui sont générés dans le cas d'un montage hyperstatique.

Les gains indirects sont :
- la diminution du temps de réponse de la commande de pas d'hélice ; et
- l'augmentation du rendement du système de commande.

## Revendications

1. Tube (34) de transfert d'huile pour un système (19) de commande de régulation du pas d'une hélice de turbomachine (1), en particulier d'aéronef, le tube étant destiné à être monté coaxialement à l'intérieur d'un arbre tubulaire (20) de l'hélice, le tube ayant une forme allongée et comportant une première partie d'extrémité longitudinale mâle (40) destinée à être engagée dans un logement femelle (32) d'un carter de stator (28) qui est équipé d'un circuit d'alimentation en huile du tube, et une seconde partie d'extrémité longitudinale mâle (44) autour de laquelle est destiné à être monté un palier hydrodynamique (46) de guidage du tube dans l'arbre, **caractérisé en ce que** ladite première partie d'extrémité comprend une extrémité annulaire libre (40b) à section arrondie convexe destinée à prendre appui axialement sur un fond annulaire (32a) dudit logement, et ladite seconde partie d'extrémité comprend une portée annulaire externe (50) d'appui axial d'une bague interne (48) dudit palier, cette portée annulaire présentant en section une forme incurvée convexe.

2. Tube (34) selon la revendication 1, dans lequel la première partie d'extrémité (40) comprend une gorge annulaire externe (40a) de logement d'un joint torique d'étanchéité, ce joint étant destiné à coopérer avec une paroi dudit logement (32).

3. Tube (34) selon la revendication 1 ou 2, dans lequel la seconde partie d'extrémité (44) comprend une gorge annulaire externe (44a) de logement d'un joint torique d'étanchéité, ce joint étant destiné à coopérer avec ladite bague interne (48).

4. Tube (34) selon l'une des revendications précédentes, dans lequel ladite portée annulaire (50) est formée par un rebord annulaire externe du tube.

5. Système (19) de commande de régulation du pas d'une hélice de turbomachine, en particulier d'aéronef, comportant un tube (34) selon l'une des revendications précédentes.

6. Turbomachine (1), en particulier d'aéronef, comportant au moins une hélice (16, 17) de propulsion entraînée en rotation par un arbre tubulaire (20), et un système (19) de commande de régulation du pas de l'hélice, ledit système comportant un tube (34) selon l'une des revendications 1 à 4 qui est monté coaxialement à l'intérieur de l'arbre, la première partie d'extrémité (40) du tube étant engagée dans un logement femelle (32) d'un carter de stator (28) qui est équipé d'un circuit d'alimentation en huile du tube, et la seconde partie d'extrémité (44) du tube étant engagée dans un palier hydrodynamique de guidage du tube dans l'arbre.

7. Turbomachine (1) selon la revendication 6, dans laquelle ledit logement (32) comprend un fond annulaire tronconique (32a) d'appui de l'extrémité libre de ladite première partie (40).

8. Turbomachine (1) selon la revendication 6 ou 7, dans laquelle ledit palier comprend une bague interne (48) montée sur ladite seconde partie (44) et comportant une extrémité libre comportant une surface annulaire (54) à section incurvée concave et sur laquelle est en appui ladite portée annulaire (50).

9. Turbomachine (1) selon la revendication 8, dans laquelle ladite surface annulaire (54) présente en section un rayon de courbure (R2) qui est supérieur au rayon de courbure (R1) de la section de ladite portée annulaire (50).

## Patentansprüche

1. Rohr (34) zur Übertragung von Öl für ein Steuersystem (19) zur Pitchregelung eines Propellers einer Turbomaschine (1), insbesondere eines Luftfahrzeugs, wobei das Rohr dazu bestimmt ist, koaxial im Inneren einer rohrförmigen Welle (20) des Propellers angebracht zu werden, wobei das Rohr eine Längsform aufweist und einen ersten länglichen Steckendteil (40) umfasst, der dazu bestimmt ist, in eine Aufnahmebuchse (32) eines Statorgehäuses (28) eingefügt zu werden, das mit einem Ölversorgungskreislauf des Rohrs ausgestattet ist, und einen zweiten länglichen Steckendteil (44), um den ein hydrodynamisches Lager (46) zur Führung des Rohrs in der Welle bestimmt ist angebracht zu werden, **dadurch gekennzeichnet, dass** der erste Endteil ein ringförmiges, freies Ende (40b) mit konvexem, rundlichem Querschnitt umfasst, das dazu bestimmt ist, sich axial auf einen ringförmigen Boden (32a) der Aufnahme zu stützen, und der zweite Endteil einen äußeren, ringförmigen Sitz (50) zur axialen Auflage eines Innenrings (48) des Lagers umfasst, wobei dieser ringförmige Sitz im Querschnitt eine konvexe, gekrümmte Form aufweist.

2. Rohr (34) nach Anspruch 1, wobei der erste Endteil (40) eine äußere, ringförmige Nut (40a) zur Aufnahme einer O-Ring-Dichtung umfasst, wobei diese Dichtung dazu bestimmt ist, mit einer Wand der Aufnahme (32) zusammenzuwirken.

3. Rohr (34) nach Anspruch 1 oder 2, wobei der zweite Endteil (44) eine äußere, ringförmige Nut (44a) zur Aufnahme einer O-Ring-Dichtung umfasst, wobei diese Dichtung dazu bestimmt ist, mit dem Innenring (48) zusammenzuwirken.

4. Rohr (34) nach einem der vorstehenden Ansprüche, wobei der ringförmige Sitz (50) von einem ringförmigen Außenrand des Rohrs gebildet wird.

5. Steuersystem (19) zur Pitchregelung eines Propellers einer Turbomaschine, insbesondere eines Luftfahrzeugs, ein Rohr (34) nach einem der vorstehenden Ansprüche umfassend.

6. Turbomaschine (1), insbesondere eines Luftfahrzeugs, mindestens einen Propellerantrieb (16, 17) umfassend, der durch eine rohrförmige Welle (20) in Drehung versetzt wird, und ein Steuersystem (19) zur Pitchregelung eines Propellers, wobei das System ein Rohr (34) nach einem der Ansprüche 1 bis 4 beinhaltet, das koaxial im Inneren der Welle angebracht ist, wobei der erste Endteil (40) des Rohrs in einer Aufnahmebuchse (32) eines Statorgehäuses (28) eingefügt ist, das mit einem Ölversorgungskreislauf des Rohrs ausgestattet ist, und der zweite Endteil (44) des Rohrs in einem hydrodynamischen Lager zur Führung des Rohrs in der Welle eingefügt ist.

7. Turbomaschine (1) nach Anspruch 6, wobei die Aufnahme (32) einen kegelstumpfförmigen, ringförmigen Boden (32a) zur Auflage des freien Endes des ersten Teils (40) umfasst.

8. Turbomaschine (1) nach Anspruch 6 oder 7, wobei das Lager einen Innenring (48) umfasst, der auf dem zweiten Teil (44) angebracht ist und ein freies Ende beinhaltet, das eine ringförmige Fläche (54) mit konkavem, gekrümmtem Querschnitt beinhaltet, auf welche sich der ringförmige Sitz (50) stützt.

9. Turbomaschine (1) nach Anspruch 8, wobei die ringförmige Fläche (54) im Querschnitt einen Krümmungsradius (R2) aufweist, der größer ist als der Krümmungsradius (R1) des Querschnitts des ringförmigen Sitzes (50).

## Claims

1. Oil transfer tube (34) for a system (19) to control the regulation of a turbine engine (1) propeller pitch, in particular of an aircraft, the tube being intended to be mounted coaxially inside a tubular shaft (20) of the propeller, the tube having an elongated shape and comprising a first male longitudinal end part (40) intended to be inserted in a female housing (32) of a stator casing (28) equipped with an oil supply circuit of the tube, and a second male longitudinal end part (44) around which is intended to be mounted a hydrodynamic bearing (46) to guide the tube in the shaft, **characterised in that** said first end part comprises a free annular end (40b) with a convex rounded cross-section intended to bear axially against an annular bottom (32a) of said housing, and **in that** said second end part comprises an outer axial annular bearing surface (50) of an inner ring (48) of said bearing, this annular bearing surface presenting in cross-section a convex curved shape.

2. Tube (34) according to claim 1, wherein the first end part (40) comprises an outer annular groove (40a) housing an O-ring seal, this seal being intended to cooperate with a wall of said housing (32).

3. Tube (34) according to claim 1 or 2, wherein the second end part (44) comprises an outer annular groove (44a) housing an O-ring seal, this seal being intended to cooperate with said inner ring (48).

4. Tube (34) according to one of the preceding claims, wherein said annular bearing surface (50) is formed by an outer annular edge of the tube.

5. Control system (19) for regulating the pitch of a turbine engine propeller, in particular of an aircraft, comprising a tube (34) according to one of the preceding claims.

6. Turbine engine (1), in particular of an aircraft, comprising at least one pusher propeller (16, 17) rotationally driven by a tubular shaft (20) and a control system (19) to regulate the pitch of the propeller, said system comprising a tube (34), according to one of the claims 1 to 4, which is mounted coaxially with respect to the inside of the shaft, the first end part (40) of the tube being inserted in a female housing (32) of a stator casing (28) equipped with an oil supply circuit of the tube, and the second end part (44) of the tube being inserted in a hydrodynamic bearing guiding the tube in the shaft.

7. Turbine engine (1) according to claim 6, wherein said housing (32) comprises a frustoconical annular bottom (32a) bearing the free end of said first part (40).

8. Turbine engine (1) according to claim 6 or 7, wherein said bearing comprises an inner ring (48) mounted on said second part (44) and comprising a free end comprising an annular surface (54) with a concave curved cross-section against which said annular bearing surface comes to bear (50).

9. Turbine engine (1) according to claim 8, wherein said annular surface (54) presents a cross-section with a radius of curvature (R2) that is greater than the radius of curvature (R1) of the cross-section of said annular bearing surface (50).
